# EUROPEAN PATENT SPECIFICATION

(11) **EP 3 414 111 B1**
(45) Date of publication and mention of the grant of the patent: **04.11.2020**
(21) Application number: 17714276.7
(22) Date of filing: 10.02.2017
(51) Int. Cl.: B60B 27/00, B60B 27/06, B60B 35/12, B60B 35/16, B60B 35/18, F16J 15/02, B60B 35/14, F16C 33/72

(54) **WHEEL HUB WITH IMPROVED SEALING SYSTEM**
RADNABE MIT VERBESSERTEM DICHTUNGSSYSTEM
MOYEU DE ROUE AVEC SYSTÈME D'ÉTANCHÉITÉ AMÉLIORÉ

(30) Priority: 11.02.2016 IT UB20160674
(43) Date of publication of application: 19.12.2018
(73) Proprietor: FPT Industrial S.p.A., 10156 Torino (IT)
(72) Inventor: ROSSIA, Giorgio, 10141 Torino (IT)
(74) Representative: Fiume, Orazio
(86) International application number: PCT/IB2017/050756
(87) International publication number: WO 2017/137950

(56) References cited:
- EP-A1- 2 572 901
- DE-A1- 3 128 341
- US-A1- 2013 044 972

## Description

### Technical field of the invention

The invention relates to the technical field of wheel hubs, in particular for driving axles of commercial vehicles, and it especially concerns the sealing system built-in in the hub.

### State of the art

The assembly of some hubs involves the use of sealing rings for different reasons. First of all, in order to prevent dust from getting into the hub with an obvious deterioration of the sliding parts, especially the bearings.

Under other circumstances, the sealing of the hub is also carried out in order to prevent possible lubricant liquids from getting out of the hub, thus leaking into the surrounding environment.

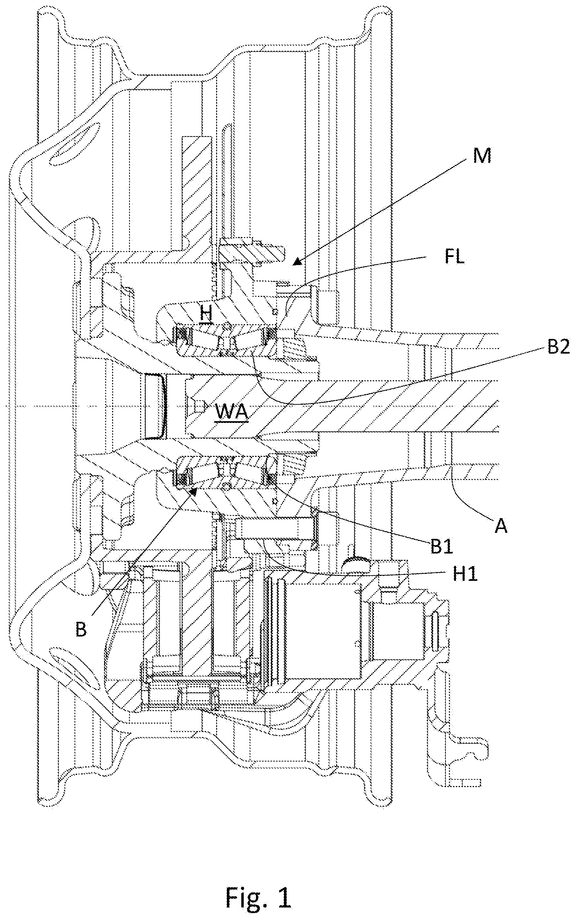

According to a solution of the known art, which is shown in figure 1, the axle (or axle bridge) A comprises a flange FL, on which the support H of the bearing is fixed, with the bearing B press fitted on the inside.

The bearing B, in turn, supports the axle shaft WA of the wheel.

Therefore, the bearing B consists of an outer part B1, which is fixed to the support H of the bearing, and a rotating part B2, which rotates with respect to the fixed part and is integral to the axle shaft WA.

According to the solution of the known art, the sealing is obtained by means of a first, radially sealing gasket 140, which is interposed between the fixed part B1 of the bearing and the hub H, and a second, axially sealing gasket 145, which is interposed between the hub H and the flange FL.

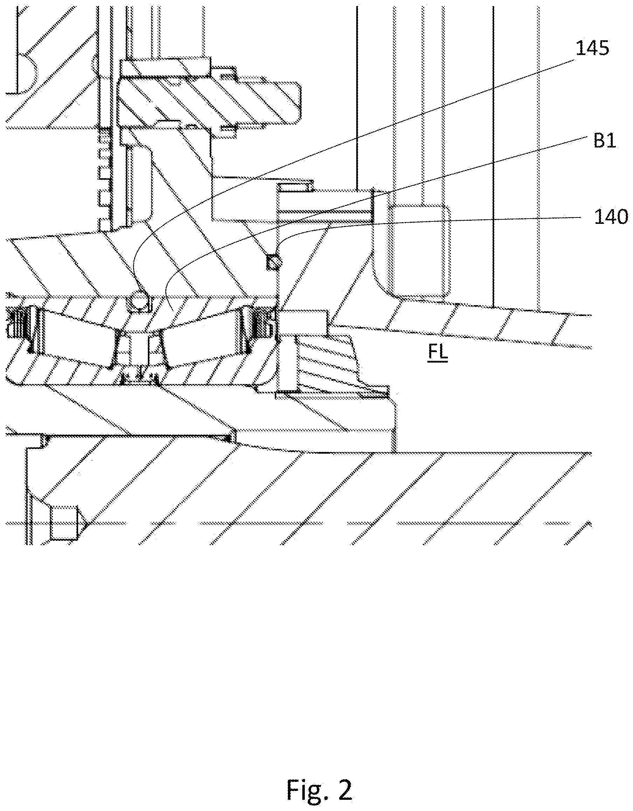

Figure 2 shows an enlargement of the portion of the hub of figure 1.

Hence, the flange FL of the axle bridge, together with the bearing support H of the axle shaft WA, helps define the hub of the vehicle wheel.

This configuration, though effective in terms of sealing, causes assembly problems for both gaskets 140 and 145. The assembly sequence involves associating the axle shaft WA with the support H and, subsequently, the hub - obtained by so doing - with the flange FL of the axle A.

The seat of the first, axially sealing gasket 140, of course, is made so as not to preload the gasket in a radial direction; therefore, as long as the hub is not associated with the flange, the first gasket tends to slip out of its seat, often remaining axially locked between the hub and the flange. Due to this problem, not only must the operation be carried out different times, until it is successful, but it is also often necessary to replace the gasket that might have deformed.

Moreover, the position of the gasket 145 is not ideal, as the possible control and replacement thereof must be carried out by disassembling the bearing B from the relative support H and, since the bearing usually is driven into the support, the operation is not easy.

DE3128341 discloses a wheel hub whose features are in the preamble of claim 1.

### Summary of the invention

Therefore, the object of the invention is to simplify the operations to be carried out to assemble a wheel hub, by acting upon the sealing system of the hub.

The idea on which the invention is based is that of changing the interaction between the parts making up the hub. More in particular, the idea is that of creating a sealing between the flange of the axle and the fixed part of the bearing.

This implies that the bearing and the flange must mechanically interact with one another in a direct manner and not indirectly though the bearing support.

The seat of the gasket is obtained between the complementary parts of the fixed part of the bearing and of the flange of the axle, so as to obtain a radial seal.

This seal preferably is the only seal of the hub, with an evident reduction of the components.

According to a further preferred embodiment of the invention, the gasket is of the type having an X-shaped cross section.

The subject-matter of the invention comprises a wheel hub with an improved sealing system, in particular for the commercial and industrial vehicles, according to figure 1. The subject-matter of the invention also comprises a commercial or industrial vehicle having an axle and a wheel hub according to the description above.

Furthermore, said axle, to which the hub belongs, can be both driving and passive, which means that the axle shaft is not connected to the vehicle transmission.

Another subject-matter of the invention is a method for assembling the aforesaid hub.

The claims describe preferred embodiments of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 shows an axial section of a wheel hub according to the prior art, and figure 2 shows an enlargement of a part of figure 1;
figure 3 shows an axial section of a wheel hub according to a preferred variant of the invention, and figure 2 shows an enlargement of a portion of figure 3.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

The invention offers an improvement with respect to the prior art and, therefore, the components making it up are the same, except for the differences that distinguish it from the prior art, which are described in detail hereinafter.

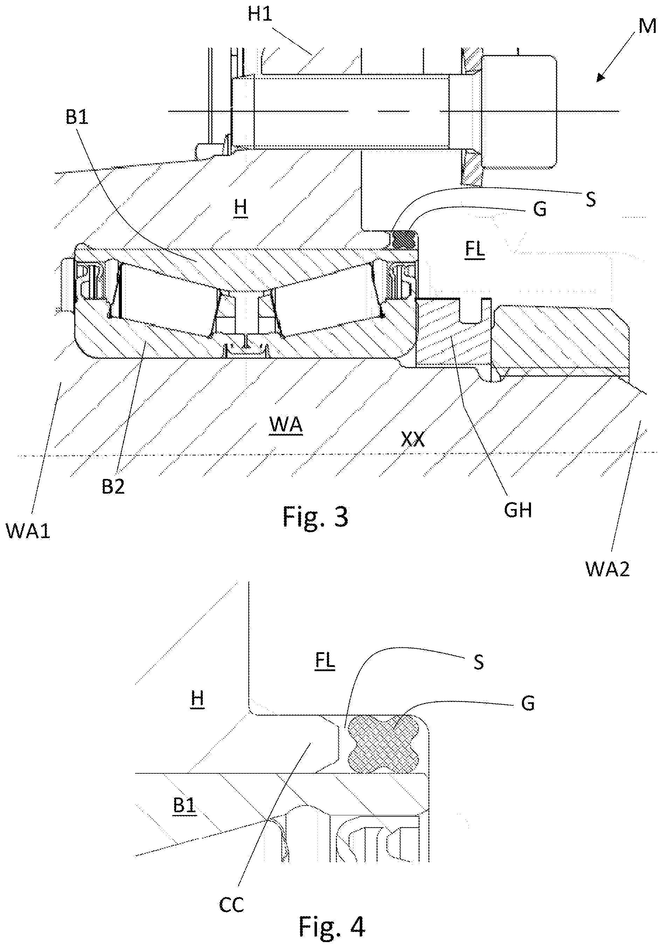

Just like the one of the prior art, the hub according to the invention, shown in figures 3 and 4, comprises a flange FL of an axle bridge A. In order to make the description simple, when possible, we used the same numbers and the same reference letters identifying the same parts or equivalent parts of figures 1 and 2 of the prior art. Figures 3 and 4 show an axle bridge that is typically used in driving axles; however, the concepts described below can also be applied to non-driving axles.

The hub also comprises a bearing support H intended to be axially associated with the flange FL and a bearing B press fitted inside the bearing support H. The bearing has a fixed and externally complementary part B1 to the bearing support H and a rotating part B2 adapted to rotatingly support an axle shaft WA. The latter has an outer end WA1 intended to be associated with a wheel and an inner end WA2, opposite the outer end, if necessary connected to a vehicle transmission.

The fixed part B1 of the bearing usually is cylindrical.

The hub comprises a sealing system formed by a gasket G and a related seat S. According to the invention, the seat is arranged for direct interaction between the fixed part B1 and the flange FL and to preload the gasket G radially. This implies that the inner end of the bearing B, when the latter is associated with the bearing support H, emerges from the support so that, when the hub is assembled, the fixed part of the bearing axially comes into contact with the flange.

The seat 2 of the gasket is defined by the interaction, i.e. by the coupling, between the bearing and the flange. Therefore, there is not annular groove specially made to house the gasket.

The flange FL preferably is bell-shaped and the relative inner cavity is bell-shaped or cylindrical, as well, so as to be complementary to the cylindrical shape of the fixed part B1 of the bearing B; by so doing, once the inner end of the bearing B has been inserted into the inner cavity of the flange, an annular interstice is defined, which is interposed between the flange and the fixed part B1 and helps define the seat S of the gasket.

Preferably, the flange/bearing coupling defines three sides of the seat S of the gasket G.

In particular, the seat has a rectangular shape with two adjacent sides defined by the flange, a third side defined by the fixed part B1 of the bearing B, and a fourth side defined by the bearing support H.

The bearing support H preferably is bell-shaped, with an end H1 intended to be associated with said flange, defining a radial joining surface, and comprises a cylindrical crest CC, coaxial with the extension XX of the bearing support H, structured to be inserted into said annular interstice blocking it.

The cylindrical crest CC preferably is bevelled both on the outer edge and on the inner edge, so as to simplify the hub assembling operations.

Clearly, many parts of the hub have an axial symmetry according to the symmetry axis XX.

Figures 3 and 4 reveal that the gasket has an X-shaped cross section. This solution has turn out to be optimal, as, after the gasket has been fitted onto the bearing B, the bearing support/bearing/axle shaft assembly can be inserted into the flange FL, without any risk for the gasket to twist on itself due to rubbing.

Therefore, according to a preferred assembly method for assembling the hub, the following steps are carried out:
- inserting the bearing into the bearing support,
- inserting the inner end of the axle shaft into the bearing support,
- blocking the axle shaft with a ring nut GH,
- fitting the gasket G onto the part of bearing that emerges from the bearing support,
- associating the bearing support with the flange.

According to further aspects of the invention, a possible brake calliper support can be in one piece with the bearing support or in one piece with the flange.

The non-limiting example described above can be subjected to variations When reading the description above, a skilled person can carry out the subject-matter of the invention without introducing further manufacturing details.

## Claims

1. Wheel hub with improved sealing system for being associated with an axle shaft (WA) having an outer end (WA1) intended to be associated with a wheel and an inner end (WA2), opposite the outer end, in particular for a commercial or industrial vehicle, comprising:
- a flange (FL) of an axle bridge (A),
- a bearing support (H) intended to be axially associated with the flange,
- a bearing (B) press fitted inside the bearing support (H), having a fixed and externally complementary part (B1) with respect to the bearing support (H) and a rotating part (B2) adapted to rotatingly support said axle shaft (WA), -,
- a sealing system formed by a gasket (G) and a related seat (S),
the wheel hub being **characterized in that** said seat is arranged
• for direct interaction between said fixed part (B1) and said flange (FL) and
• to preload said gasket radially.

2. Hub according to claim 1, wherein said flange (FL) has a bell-shaped or cylindrical inner cavity and wherein said fixed part (B1) of the bearing, externally cylindrical, is adapted to be inserted into said inner cavity, defining an annular interstice, interposed between said flange and said fixed part (B1), which contributes to define said seat (S) .

3. Hub according to claim 2, wherein said bearing support (H) is bell-shaped, with an end (H1) intended to be associated with said flange, defining a radial joining surface, and comprises a cylindrical crest (CC), coaxial with the extension of the bearing support, structured to be inserted into said annular interstice blocking it.

4. Hub according to claim 3, wherein said cylindrical crest (CC) is bevelled both on the outer edge and on the inner edge.

5. Hub according to any one of the preceding claims, wherein said gasket (G) has a cross section X-shaped.

6. Hub according to any one of the preceding claims, wherein said gasket (G) is the only gasket of the hub.

7. Hub according to any one of the preceding claims, wherein a brake calliper support is in one piece with said bearing support or in one piece with said flange.

8. Commercial or industrial vehicle comprising an axle and a wheel hub according to any one of the preceding claims.

9. Vehicle according to claim 8, wherein said axle is driving and wherein said axle shaft has an inner end connected with a vehicle transmission.

10. Assembly method of a wheel hub according to any one of claims 1 to 7, comprising the following steps:
- inserting the bearing (B) into the bearing support (H),
- inserting the inner end of the axle shaft (WA) into the bearing support (H),
- blocking the inner end of the axle shaft with a ring nut (GH),
- press fitting the gasket (G) onto the part of bearing that emerges from the bearing support,
- associating the bearing support with the flange.

## Patentansprüche

1. Radnabe mit verbessertem Dichtungssystem zur Verbindung mit einer Achswelle (WA), mit einem äußeren Ende (WA1), das dazu vorgesehen ist, mit einem Rad verbunden zu werden, und einem dem äußeren Ende entgegengesetzten inneren Ende (WA2), insbesondere für ein Nutz- oder Industriefahrzeug, umfassend:
- einen Flansch (FL) einer Achsbrücke (A),
- einen Lagerträger (H), der dazu vorgesehen ist, axial mit dem Flansch verbunden zu werden,
- ein Lager (B), das in den Lagerträger (H) eingepresst ist und einen fixierten und äußerlich in Bezug auf den Lagerträger (H) komplementären Teil (B1) sowie einen zur drehenden Lagerung der Achswelle (WA) angepassten drehenden Teil (B2) aufweist,
- ein Dichtungssystem, ausgebildet aus einer Dichtung (G) und einem zugehörigen Sitz (S),
wobei die Radnabe **dadurch gekennzeichnet ist, dass** der Sitz eingerichtet ist
• für eine direkte Wechselwirkung zwischen dem fixierten Teil (B1) und dem Flansch (FL) und
• zum radialen Vorspannen der Dichtung.

2. Nabe nach Anspruch 1, wobei der Flansch (FL) einen glockenförmigen oder zylindrischen inneren Hohlraum aufweist und wobei der fixierte Teil (B1) des Lagers, der außen zylindrisch ist, angepasst ist, in den inneren Hohlraum eingesetzt zu werden, um einen ringförmigen Zwischenraum zu definieren, der zwischen dem Flansch und dem fixierten Teil (B1) angeordnet ist, was zu der Definition des Sitzes (S) beiträgt.

3. Nabe nach Anspruch 2, wobei der Lagerträger (H) glockenförmig ist, mit einem Ende (H1), das dazu vorgesehen ist, mit dem Flansch verbunden zu werden, um eine radiale Fugenoberfläche zu definieren, und einen mit der Verlängerung des Lagerträgers koaxialen, zylindrischen Scheitel (CC) umfasst, der strukturiert ist, um in den ringförmigen Zwischenraum eingesetzt zu werden und ihn zu blockieren.

4. Nabe nach Anspruch 3, wobei der zylindrische Scheitel (CC) sowohl an der Außenkante als auch an der Innenkante abgeschrägt ist.

5. Nabe nach einem der vorhergehenden Ansprüche, wobei die Dichtung (G) einen X-förmigen Querschnitt aufweist.

6. Nabe nach einem der vorhergehenden Ansprüche, wobei die Dichtung (G) die einzige Dichtung der Nabe ist.

7. Nabe nach einem der vorhergehenden Ansprüche, wobei ein Bremssattelträger einstückig mit dem Lagerträger oder mit dem Flansch ausgebildet ist.

8. Nutz- oder Industriefahrzeug, umfassend eine Achse und eine Radnabe nach einem der vorhergehenden Ansprüche.

9. Fahrzeug nach Anspruch 8, wobei die Achse antreibend ist und wobei die Achswelle ein inneres Ende aufweist, das mit einem Fahrzeuggetriebe verbunden ist.

10. Montageverfahren einer Radnabe nach einem der Ansprüche 1 bis 7, die folgenden Schritte umfassend:
- Einsetzen des Lagers (B) in den Lagerträger (H),
- Einsetzen des inneren Endes der Achswelle (WA) in den Lagerträger (H),
- Blockieren des inneren Endes der Achswelle mit einer Ringmutter (GH),
- Aufpressen der Dichtung (G) auf den Teil des Lagers, der aus dem Lagerträger austritt,
- Verbinden des Lagerträgers mit dem Flansch.

## Revendications

1. Moyeu de roue muni d'un système d'étanchéité amélioré destiné à être associé à un arbre d'essieu (WA) qui comporte une extrémité externe (WA1) qui est destinée à être associée à une roue et une extrémité interne (WA2), opposée à l'extrémité externe, en particulier pour un véhicule commercial ou industriel, comprenant :
- une bride (FL) d'un pont d'essieu (A) ;
- un support de palier (H) qui est destiné à être associé axialement à la bride ;
- un palier (B) qui est ajusté par pression à l'intérieur du support de palier (H), qui comporte une partie fixe et complémentaire de façon externe (B1) par rapport au support de palier (H) et une partie rotative (B2) qui est adaptée pour supporter à rotation ledit arbre d'essieu (WA) ;
- un système d'étanchéité qui est formé par une garniture d'étanchéité (G) et par un siège afférent (S) ;
le moyeu de roue étant **caractérisé en ce que** ledit siège est agencé
• pour une interaction directe entre ladite partie fixe (B1) et ladite bride (FL) ; et
• pour précharger ladite garniture d'étanchéité radialement.

2. Moyeu selon la revendication 1, dans lequel ladite bride (FL) comporte une cavité interne en forme de cloche ou cylindrique et dans lequel ladite partie fixe (B1) du palier, cylindrique du point de vue externe, est adaptée pour être insérée à l'intérieur de ladite cavité interne, en définissant un interstice annulaire, interposé entre ladite bride et ladite partie fixe (B1), ce qui contribue à définir ledit siège (S).

3. Moyeu selon la revendication 2, dans lequel ledit support de palier (H) est en forme de cloche, l'une de ses extrémités (H1) étant destinée à être associée à ladite bride, en définissant une surface de jonction radiale, et comprend une crête cylindrique (CC), qui est coaxiale par rapport à l'extension du support de palier, structurée pour être insérée à l'intérieur dudit interstice annulaire qui la bloque.

4. Moyeu selon la revendication 3, dans lequel ladite crête cylindrique (CC) est biseautée à la fois sur le bord externe et sur le bord interne.

5. Moyeu selon l'une quelconque des revendications qui précèdent, dans lequel ladite garniture d'étanchéité (G) présente une section en coupe transversale en forme de X.

6. Moyeu selon l'une quelconque des revendications qui précèdent, dans lequel ladite garniture d'étanchéité (G) est la seule garniture d'étanchéité du moyeu.

7. Moyeu selon l'une quelconque des revendications qui précèdent, dans lequel un support d'étrier de frein est d'une seule pièce avec ledit support de palier ou est d'une seule pièce avec ladite bride.

8. Véhicule commercial ou industriel comprenant un essieu et un moyeu de roue selon l'une quelconque des revendications qui précèdent.

9. Véhicule selon la revendication 8, dans lequel ledit essieu est un essieu d'entraînement et dans lequel ledit arbre d'essieu comporte une extrémité interne qui est connectée à une transmission de véhicule.

10. Procédé d'assemblage d'un moyeu de roue selon l'une quelconque des revendications 1 à 7, comprenant les étapes qui suivent :
- l'insertion du palier (B) à l'intérieur du support de palier (H) ;
- l'insertion de l'extrémité interne de l'arbre d'essieu (WA) à l'intérieur du support de palier (H) ;
- le blocage de l'extrémité interne de l'arbre d'essieu au moyen d'un écrou à œillet (GH) ;
- l'ajustement par pression de la garniture d'étanchéité (G) sur la partie de palier qui émerge du support de palier ; et
- l'association du support de palier avec la bride.
